# EUROPÄISCHE PATENTSCHRIFT

(11) **EP 2 287 027 B1**
(45) Veröffentlichungstag und Bekanntmachung des Hinweises auf die Patenterteilung: **03.10.2012**
(21) Anmeldenummer: 10401132.5
(22) Anmeldetag: 10.08.2010
(51) Int. Cl.: B60H 1/34

(54) **Lüftungsdüse**
Ventilation nozzle
Buse d'aération

(30) Priorität: 20.08.2009 DE 102009038260
(43) Veröffentlichungstag der Anmeldung: 23.02.2011
(73) Patentinhaber: fischer automotive systems GmbH & Co. KG, 72160 Horb (DE)
(72) Erfinder: Bastian, Ulf-Lothar, 72285 Pfalzgrafenweiler (DE)

(56) Entgegenhaltungen:
- EP-A2- 1 279 532
- DE-C1- 4 138 613
- DE-U- 1 917 945

## Beschreibung

Die Erfindung betrifft eine Lüftungsdüse zur Belüftung eines Fahrgastraums eines Fahrzeugs mit den Merkmalen des Oberbegriffs des Anspruchs 1.

Derartige Lüftungsdüsen sind beispielsweise von Kraftwagen bekannt. Sie sind üblicherweise rohrförmig mit rundem, nicht unbedingt kreisförmigem, oder eckigem Querschnitt und können feststehende oder schwenkbare Lamellen zur Lenkung eines Luftstroms durch die Lüftungsdüse aufweisen.

Die Patentanmeldung GB 2 303 205 A offenbart eine Lüftungsdüse mit einer Anzahl zueinander paralleler Lamellen, die starr in einem Rahmen angeordnet sind, der schwenkbar in der Lüftungsdüse gelagert ist. Wird der Rahmen weit geschwenkt, entstehen Spalte zwischen dem Rahmen und der Lüftungsdüse. Um einen Luftdurchtritt durch diese Spalte zu vermeiden, sieht die genannte Patentanmeldung Spoiler vor, die von der Lüftungsdüse nach innen abstehen und die Spalte zwischen dem die Lamellen aufweisenden Rahmen, wenn er weit geschwenkt ist, und der Lüftungsdüse abdecken. Die Spoiler bilden Hinterschneidungen, die ein Entformen der Lüftungsdüse aus einer Kavität eines Werkzeugs nach Herstellung der Lüftungsdüse durch Urformen verhindern. Die Spoiler müssen deswegen separat hergestellt und in der Lüftungsdüse angebracht werden.

Aufgabe der Erfindung ist, eine Lüftungsdüse mit einem Spoiler oder allgemein einer Luftleiteinrichtung in Form eines Spoilers vorzuschlagen, der/die eine beweglich ausgebildet ist und trotzdem aus der Kavität eines Urform-Werkzeugs entformbar ist.

Diese Aufgabe wird erfindungsgemäß durch die Merkmale des Anspruchs 1 gelöst.Die Erfindung hat den Vorteil einer einfacheren und preisgünstigeren Herstellbarkeit der Lüftungsdüse, abhängig von der Ausführung der Erfindung wird beispielsweise die Herstellung der Luftleiteinrichtung als eigenes Bauteil und das Anbringen in der Luftleitdüse eingespart.

Die Luftleiteinrichtung kann einstückiger Bestandteil der Lüftungsdüse und in einem Arbeitsgang mit ihr durch Urformen, beispielsweise Spritzgießen, hergestellt sein. Eine Ausgestaltung der Erfindung sieht vor, dass die Luftleiteinrichtung an einem Halter ausgebildet ist, der in die Lüftungsdüse eingesetzt ist bzw. wird. Der Halter kann ein ohnehin notwendiger Rahmen sein, der beispielsweise Lamellen der Lüftungsdüse aufweist. Die Aufzählung ist beispielhaft und nicht abschließend.

Eine Weiterbildung der Erfindung sieht vor, dass die Lüftungsdüse die Luftleiteinrichtung in der Funktionsstellung hält, wenn der Halter, an dem die Luftleiteinrichtung ausgebildet ist, in die Lüftungsdüse eingesetzt ist. Es drückt beispielsweise die Lüftungsdüse die Luftleiteinrichtung nach innen in die Lüftungsdüse in ihre luftleitende Funktionsstellung, in der sie zugleich auch die Hinterschneidung bildet.

Es ist möglich, die Luftleiteinrichtung aus einem anderen Werkstoff als die Lüftungsdüse und/oder elastisch auszubilden. Es ist im Rahmen der Erfindung beispielsweise möglich, die Luftleiteinrichtung elastisch verformbar so auszubilden, dass sich die Lüftungsdüse entformen lässt. Beim und durch das Entformen wird die Luftleiteinrichtung beispielsweise vom Werkzeug zur Seite gedrückt, so dass die Lüftungsdüse entformt werden kann. Eine Ausgestaltung der Erfindung sieht eine Schwenkbarkeit der Luftleiteinrichtung vor; die Luftleiteinrichtung lässt sich aus der Funktionsstellung in die Stellung, in der sie entformbar ist, und/oder umgekehrt schwenken.

Eine Weiterbildung der Erfindung sieht ein Filmscharnier für die Schwenkbarkeit der Luftleiteinrichtung vor. Ein Filmscharnier ist ein gerader, linienförmiger Bereich, der dünnwandiger als angrenzende Bereiche und so dünnwandig ist, dass er eine Schwenkbarkeit nach Art eines Scharniers ermöglicht. Typisch ist eine ein- oder doppelseitige Nut zur Ausbildung eines Filmscharniers. Andere Ausführungen sind nicht ausgeschlossen.

Die Erfindung wird nachfolgend anhand eines in der Zeichnung dargestellten Ausführungsbeispiels näher erläutert. Es zeigen:
- Figur 1: einen Längsschnitt einer erfindungsgemäßen Lüftungsdüse; und
- Figur 2: die Darstellung einer Einzelheit gemäß Pfeil II in Figur 1

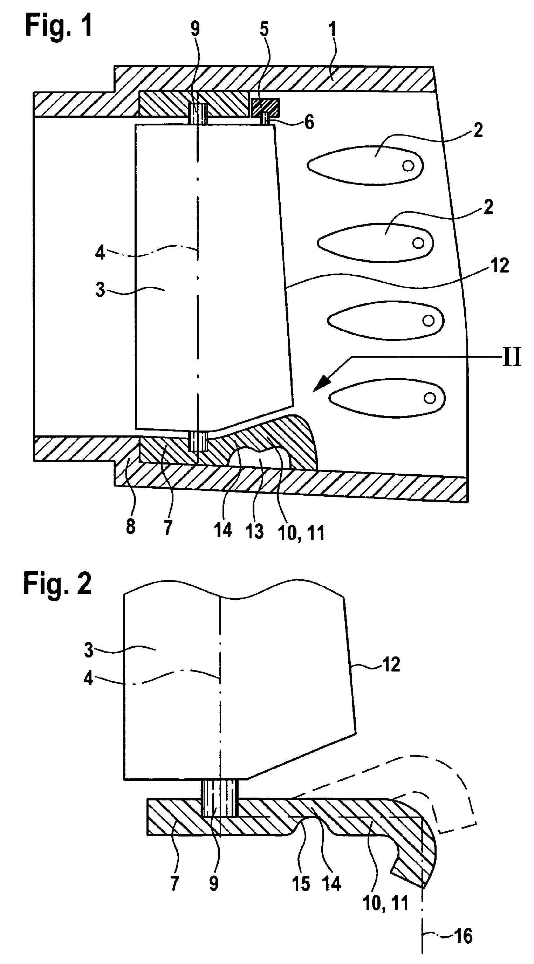

Die in Figur 1 dargestellte, erfindungsgemäße Lüftungsdüse 1 ist zur Belüftung eines Fahrgastraums eines nicht dargestellten Kraftwagens vorgesehen. Die Lüftungsdüse 1 ist rechteckrohrförmig, sie weitet sich in einer Durchströmungsrichtung (in Figur 1 von links nach rechts) etwas auf. In einer Austrittsmündung sind Lamellen 2 horizontal und parallel zueinander angeordnet, die gemeinsam um horizontale Achsen schwenkbar sind. In einem mittleren Bereich der Lüftungsdüse 1, in Durchströmungsrichtung also vor den horizontalen Lamellen 2, sind Lamellen 3 vertikal und parallel zueinander angeordnet, die gemeinsam um vertikale Achsen 4 schwenkbar sind. Zum gemeinsamen Schwenken ist eine Stange 5 quer und randnah in der Lüftungsdüse 1 angeordnet, in die Zapfen 6 der Lamellen 3 eingreifen. Durch eine Bewegung der Stange 5 quer zur Lüftungsdüse 1 werden die Lamellen 3 geschwenkt.

Die vertikalen Lamellen 3 sind in einem Rahmen 7 gehalten und schwenkbar gelagert. Der Rahmen 7 ist rechteckig wie die Lüftungsdüse 1, seine Außenkontur stimmt mit einer Innenkontur der Lüftungsdüse 1 überein. Der Rahmen 7 liegt an einer umlaufenden Stufe 8 der Lüftungsdüse 1 an. Die Lamellen 3 weisen Lagerzapfen 9 auf, die in Lagerlöcher des Rahmens 7 eingreifen, so dass die Lamellen 3 schwenkbar im Rahmen 7 gelagert sind. Der Rahmen 7 weist eine Luftleiteinrichtung 10 in Form eines Spoilers 11 auf, der an einer unteren Seite des Rahmens 7 in Strömungsrichtung hinter den Lagerzapfen 9 angeordnet ist und der sich in Strömungsrichtung gesehen zunächst in die Lüftungsdüse 1 hinein erhebt, um nach einer Hinterkante 12 der vertikalen Lamellen 3 nach außen zu einer Wand der Lüftungsdüse 1 abzufallen. Der Spoiler 11, der die Luftleiteinrichtung 10 bildet, erstreckt sich also ein Stück weit in die Lüftungsdüse 1 hinein. Auf seiner Außen- oder Unterseite weist der Spoiler 11 einen Hohlraum 13 zwischen sich und der Wand der Lüftungsdüse 1 auf. Form und Anordnung des Spoilers 11 oder allgemein der Luftleiteinrichtung 10 sind nicht wesentlich für die Erfindung, die Luftleiteinrichtung 10 kann eine andere Form aufweisen und/oder an anderer Stelle angeordnet sein. Durch ihre Erhebung in die Lüftungsdüse 1 hinein und den Hohlraum 13 auf der Außen- oder Unterseite bildet die Luftleiteinrichtung 10 eine Hinterschneidung, die ein Entformen des Rahmens 7 aus einem Werkzeug nach einem Spritzgießen verhindert oder ein aufwendiges Werkzeug mit mindestens einem Schieber erfordern würde, um den Rahmen 7 entformen zu können. Der Spoiler 11, der die Luftleiteinrichtung 10 bildet, ist deswegen beweglich mit dem Rahmen 7 verbunden, er wird gemeinsam und einstückig mit dem Rahmen 7 in einer Lage hergestellt, in der sich der Rahmen 7 entformen lässt, und wird beim Einsetzen in die Lüftungsdüse 1 in eine Funktionslage bewegt, in der er sich in den Innenraum der Lüftungsdüse 1 erhebt, um eine Luftdurchströmung durch die Lüftungsdüse 1 zu leiten. Im Ausführungsbeispiel ist der Spoiler 11 über ein Filmscharnier 14 schwenkbar mit dem Rahmen 7 verbunden. Das Filmscharnier 14 ist durch eine gerade Rille 15 gebildet, die quer zur Lüftungsdüse 1, d. h. in Längsrichtung der Seite des Rahmens 7, an der der Spoiler 11 angeordnet ist, verläuft. Die Rille 15 verringert eine Wanddicke des Rahmens 7 so, dass sich der Spoiler 11 schwenken lässt. In Figur 2 ist mit durchgezogenen Linien die Lage des Spoilers 11 nach dem Entformen und mit Strichlinien die nach oben bzw. innen in den Innenraum der Lüftungsdüse 1 hinein verschwenkte Stellung dargestellt. Der Spoiler 11 wird beim Einsetzen in die Lüftungsdüse 1 von deren Wand nach innen in die Funktionsstellung geschwenkt und in dieser Funktionsstellung gehalten.

Die Herstellung der vertikalen Lamellen 3 und des Rahmens 7 erfolgt in zwei Schritten in einem sog. Montagespritzguß in einem nicht dargestellten Werkzeug. Im Werkzeug werden im ersten Schritt die Lamellen 3 spritzgegossen. Sie weisen im Werkzeug ihre spätere räumliche Anordnung, d. h. parallel nebeneinander, auf. Außer Kavitäten für die Lamellen 3 weist das nicht dargestellte Werkzeug eine Kavität für den Rahmen 7 einschließlich seines Spoilers 11 auf. Die Kavität für den Rahmen 7 ist im ersten Schritt beim Spritzgießen der Lamellen 3 von einem Kern ausgefüllt. Nach dem Spritzgießen der Lamellen 3 wird das Werkzeug geöffnet, der Kern entnommen und das Werkzeug wieder geschlossen. Die Lamellen 3 bleiben im Werkzeug und es wird in einem zweiten Schritt der Rahmen 7 spritzgegossen. Danach wird das Werkzeug wieder geöffnet und der Rahmen 7 mit den Lamellen 3 entformt. Der Spoiler 11 nimmt, wie bereits ausgeführt, die in Figur 2 mit durchgezogenen Linien dargestellte Herstellungslage ein, die das Entformen aus dem Werkzeug ermöglicht. In der Herstellungslage erstreckt sich der Spoiler 11 in einer Ebene mit der Seite des Rahmens 7, an der er angeordnet ist, und verläuft im Abschluss hakenförmig nach außen gebogen. Eine Teilungsebene 16 des Werkzeugs befindet sich an der Stelle, an der die Lamellen 3 am dicksten sind, im Ausführungsbeispiel ist das eine Ebene, in der sich die Schwenkachsen 4 der Lamellen 3 befinden. An der Seite des Rahmens 7, an der sich der Spoiler 11 befindet, ist die Teilungsebene 16 des Werkzeugs, wie mit der Strichpunktlinie in Figur 2 gezeichnet, abgewinkelt, verläuft also in der Ebene dieser Seite des Rahmens 7 und ist dort, wo der Spoiler 11 im Querschnitt hakenförmig nach außen gebogen verläuft, erneut nach außen abgewinkelt. Es bildet zwar die Rille 15, die zur Ausbildung des Filmscharniers 14 vorhanden ist, eine Hinterschneidung, allerdings ist die Rille 15 so flach und gerundet, dass sich der Rahmen 7 mit den Lamellen 3 trotzdem entformen lässt.

Beim Einsetzen des Rahmens 7 in die Lüftungsdüse 1 schwenkt, wie bereits ausgeführt, eine Wand der Lüftungdüse 1 den Spoiler 11 nach innen in seine Funktionsstellung. Der Rahmen 7 bildet einen Halter für den Spoiler 11, der die Luftleiteinrichtung 10 der Lüftungsdüse 1 bildet.

### Lüftungsdüse

- 1: Lüftungsdüse
- 2: Lamelle
- 3: Lamelle
- 4: Schwenkachse
- 5: Stange
- 6: Zapfen
- 7: Rahmen
- 8: Stufe
- 9: Lagerzapfen
- 10: Luftleiteinrichtung
- 11: Spoiler
- 12: hintere Kante
- 13: Hohlraum
- 14: Filmscharnier
- 15: Rille
- 16: Teilungsebene

## Patentansprüche

1. Lüftungsdüse zur Belüftung eines Fahrgastraums eines Fahrzeugs, wobei in der Lüftungsdüse (1) eine Luftleiteinrichtung (10) in Form eines Spoilers (11) angeordnet ist, der sich in einer luftleitenden Funktionsstellung in den Innenraum der Lüftungsdüse (1) erhebt, **dadurch gekennzeichnet, dass** der Spoiler (11) beweglich an einem in die Lüftungsdüse (1) einsetzbaren Halter (7) ausgebildet ist, so dass der Spoiler (11) beim Einsetzen des Halters (7) in die Lüftungsdüse (1) in die Funktonsstellung bewegt und von der Lüftungsdüse (1) in der Funktionsstellung gehalten wird.

2. Lüftungsdüse nach Anspruch 1, **dadurch gekennzeichnet, dass** der Spoiler (11) aus der Funktionsstellung in eine Herstellungslage und umgekehrt schwenkbar ist.

3. Lüftungsdüse nach Anspruch 2, **dadurch gekennzeichnet, dass** der Spoiler (11) ein Filmscharnier (14) aufweist.

4. Lüftungsdüse nach Anspruch 2, **dadurch gekennzeichnet, dass** der Spoiler (11) elastisch verformbar ist.

## Claims

1. Ventilation nozzle for supplying air to the passenger compartment of a vehicle, wherein in the ventilation nozzle (1) there is arranged an air-guiding device (10) in the form of a spoiler (11) which, in an air-guiding functional position, rises into the interior of the ventilation nozzle (1), **characterized in that** the spoiler (11) is movably formed on a holder (7) that is insertable into the ventilation nozzle (1 so that the spoiler (11), on insertion of the holder (7) into the ventilation nozzle (1), moves into the functional position and is held in the functional position by the ventilation nozzle (1).

2. Ventilation nozzle according to claim 1, **characterized in that** the spoiler (11) is pivotable out of the functional position into a production position and *vice versa.*

3. Ventilation nozzle according to claim 2, **characterized in that** the spoiler (11) has a film hinge (14).

4. Ventilation nozzle according to claim 2, **characterized in that** the spoiler (11) is resiliently deformable.

## Revendications

1. Buse de ventilation conçue pour ventiler un habitacle de véhicule, ladite buse de ventilation (1) renfermant un dispositif (10) de guidage d'air qui revêt la forme d'un aileron (11) se dressant dans l'espace intérieur de ladite buse de ventilation (1), dans une position fonctionnelle de guidage de l'air, **caractérisée par le fait que** l'aileron (11) est réalisé avec mobilité sur un support (7) pouvant être inséré dans la buse de ventilation (1) de façon telle que, lors de l'insertion dudit support (7) dans ladite buse de ventilation (1), ledit aileron (11) soit mû jusqu'à la position fonctionnelle, et soit retenu dans ladite position fonctionnelle par ladite buse de ventilation (1).

2. Buse de ventilation selon la revendication 1, **caractérisée par le fait que** l'aileron (11) peut pivoter de la position fonctionnelle à une position de fabrication, et inversement.

3. Buse de ventilation selon la revendication 2, **caractérisée par le fait que** l'aileron (11) présente une charnière pelliculaire (14).

4. Buse de ventilation selon la revendication 2, **caractérisée par le fait que** l'aileron (11) est déformable élastiquement.
